# EUROPEAN PATENT APPLICATION

(11) **EP 3 220 587 A1**
(43) Date of publication of application: **20.09.2017**
(21) Application number: 16871746.0
(22) Date of filing: 30.09.2016
(51) Int. Cl.: H04L 12/741

(54) **METHOD AND APPARATUS FOR LEARNING MAC ADDRESS OF TRILL NETWORK**

(30) Priority: 09.12.2015 CN 201510907128
(71) Applicant: Phicomm (Shanghai) Co., Ltd., Shanghai 201616 (CN)
(72) Inventor: GUO, Junmin, Shanghai 201616 (CN)
(74) Representative: Sun, Yiming
(86) International application number: PCT/CN2016/101395
(87) International publication number: WO 2017/097024

(57) **Abstract**

The present disclosure provides a method and apparatus for learning a MAC address of a TRILL network. The method comprises: learning, by a routing bridge connected to an end system, a MAC address of the end system; encapsulating the MAC address in a link-state packet, sending the link-state packet to a neighbor routing bridge; after the neighbor routing bridge receives the link-state packet, judging whether the MAC address in the link-state packet is locally present; if not, learning the MAC address in the link-state packet and setting a local confidence to a confidence of the MAC address in the link-state packet; if yes, updating a confidence of a local MAC address to the confidence of the MAC address in the link-state packet, increasing the confidence of the MAC address in the link-state packet by 1, and sending the link-state packet to all neighbor routing bridges except a receiving end.

## Description

### TECHNICAL FIELD

The present disclosure relates to the technical field of communications, and in particular, relates to a method and apparatus for learning a media access control (MAC) address of a Transparent Interconnection of Lots of Links (TRILL) network.

### BACKGROUND

To solve the problems of bandwidth waste, slow convergence and the like of the Spanning Tree Protocol, the Internet Engineering Task Force (IETF) has established the Transparent Interconnection of Lost of Links (TRILL) protocol to introduce the design concept of Layer-3 routing technology-based Intermediate System-to-Intermediate System (IS-IS) to a Layer-2 network, and made necessary improvements, which efficiently combines the simplicity and flexibility of Layer-2 with the stability, extensibility and high performance of Layer-3.

The device running the TRILL protocol is referred to as a routing bridge (RBridge, RB). At the ingress and egress of a TRILL network, the RBridge needs to provide services for an end system (ES), and therefore knowledge regarding media access control (MAC) information of the ES is required. Currently, the RBridge acquires the MAC address information mainly in the following manners: 1) self-learning, learning the MAC address information by means of encapsulation/decapsulation of TRILL data frames; 2) enabling the ESADI protocol, and advertising and learning the MAC address information of each other; 3) learning the MAC address information by means of end system registration. The RBridge enabling ESADI proactively advertises local MAC address information, and thus timely acknowledge variations of the MAC address information on other RBridges, which is one of the major manners of the MAC address information interaction between the RBridges.

However, in the prior art, the TRILL protocol itself uses an IS-IS mechanism to advertise information. The ESADI, as an auxiliary protocol of the TRILL protocol, also uses the IS-IS mechanism to advertise information, which causes code redundancy and system resources waste.

### SUMMARY

In view of the above technical problem, the present disclosure discloses a method for learning a MAC address of a TRILL network. The method includes the following steps:
learning, by a routing bridge connected to an end system, a MAC address of the end system;
encapsulating the MAC address into a link-state packet, and sending the link-state packet to a neighbor routing bridge;
after the neighbor routing bridge receives the link-state packet, judging whether the MAC address in the link-state packet is locally present;
if the MAC address is not present, learning the MAC address in the link-state packet, and setting a local confidence to a confidence of the MAC address in the link-state packet;
if the MAC address is present, updating a confidence of a local MAC address to the confidence of the MAC address in the link-state packet; and
increasing the confidence of the MAC address in the link-state packet by 1, and sending the link-state packet to all neighbor routing bridges except for a receiving end.

According to one implementation, the MAC address of the end system is encapsulated in the link-state packet in a TLV form.

According to another implementation, an ID of the link-state packet is 0000.0000.0000.00-00.

According to yet another implementation, the process of updating a confidence of a local MAC address to the confidence of the MAC address in the link-state packet comprises steps of:
judging whether the confidence of the local MAC address is greater than the confidence of the MAC address in the received link-state packet;
if the confidence of the local MAC address is greater than the confidence of the MAC address in the received link-state packet, updating the confidence of the local MAC address to the confidence of the MAC address in the link-state packet, and performing the step of increasing the confidence of the MAC address in the link-state packet by 1 and sending the link-state packet to all neighbor routing bridges except for a receiving end; and
if the confidence of the local MAC address is not greater than the confidence of the MAC address in the received link-state packet, not updating the confidence of the local MAC address.

According to yet another implementation, upon the step of not updating the confidence of the local MAC address, the method further includes:
when an update cycle is reached, increasing, by a local routing bridge, the confidence of the MAC address in the link-state packet by 1, and sending the updated link-state packet to all neighbors except the receiving end.

According to yet another implementation, the link-state packet is flooded to all routing bridges in the TRILL network, and the routing bridge performs the step of judging whether the MAC address in the link-state packet is locally present upon receiving the link-state packet.

According to yet another implementation, when the confidence in the link-state packet reaches 255, the link-state packet is not sent out.

The present disclosure further provides an apparatus for learning a MAC address of a TRILL network. The apparatus includes:
a learning and encapsulating module, configured to learn a MAC address of an end system and encapsulate the MAC address in a link-state packet;
a judging module, connected to the learning and encapsulating module, and configured to judge whether the MAC address in the link-state packet is locally present;
a first setting module, connected to the judging module, and configured to set a local confidence to a confidence of the MAC address in the link-state packet;
a second setting module, connected to the judging module, and configured to update a confidence of a local MAC address to the confidence of the MAC address in the link-state packet; and
an increasing module, connected to the first setting module and the second setting module respectively, and configured to increase the confidence of the MAC address in the link-state packet by 1.

According to one implementation, the second setting module includes:
a judging unit, connected to the judging module, and configured to judge whether the confidence of the local MAC address is greater than the confidence of the MAC address in the received link-state packet;
an updating unit, connected to the judging unit and the increasing module, and configured to update the confidence of the local MAC address to the confidence of the MAC address in the link-state packet.

According to another implementation, the second setting unit includes:
a cycle unit, connected to the judging unit, and configured to, when an update cycle is reached, increase the confidence of the MAC address in the link-state packet by 1, and send the updated link-state packet to all neighbors except a receiving end.

The above technical solutions achieve the following beneficial effects:
According to the present disclosure, the MAC address is advertised using the IS-IS flooding mechanism, and infinite cycling of the link-state packet is prevented using a mechanism of increasing the confidences of the routing bridges one by one. The method according to the present disclosure does not affect synchronization of an original TRILL link-state database, and does not rely on a TRILL router. In addition, the method may be simply practiced, and thus system resources are saved.

### BRIEF DESCRIPTION OF THE DRAWINGS

Embodiments of the present disclosure are more sufficiently described with reference to the accompanying drawings. However, the accompanying drawings are merely used for describing and illustrating the present disclosure, instead of construing any limitation to the scope of the present disclosure.
FIG. 1 is one schematic flowchart of a method for learning a MAC address of a TRILL network according to the present disclosure;
FIG. 2 is another schematic flowchart of a method for learning a MAC address of a TRILL network according to the present disclosure;
FIG. 3 is one schematic structural diagram of an apparatus for learning a MAC address of a TRILL network according to the present disclosure; and
FIG. 4 is another schematic structural diagram of an apparatus for learning a MAC address of a TRILL network according to the present disclosure; and

### DETAILED DESCRIPTION

A method and apparatus for learning a MAC address of a TRILL network according to the present disclosure are described in detail with reference to the accompanying drawings and specific embodiments.

### Embodiment 1

In a TRILL network, a routing bridge learns a MAC address and floods the MAC address to a neighbor routing bridge. During this process, the routing bridge connected to an edge system learns a MAC address of the end system, and the routing bridge sends a link-state packet carting the MAC address to the neighbor routing bridges except a receiving end. To be simple, the routing bridge learns the MAC address of the end system, encapsulates the learned MAC address into a particular link-state packet, and floods the link-state packet to the neighbor routing bridges. The neighbor routing bridge receives the link-state packet, checks the link-state packet and continuously floods the link-state packet to a neighbor thereof.

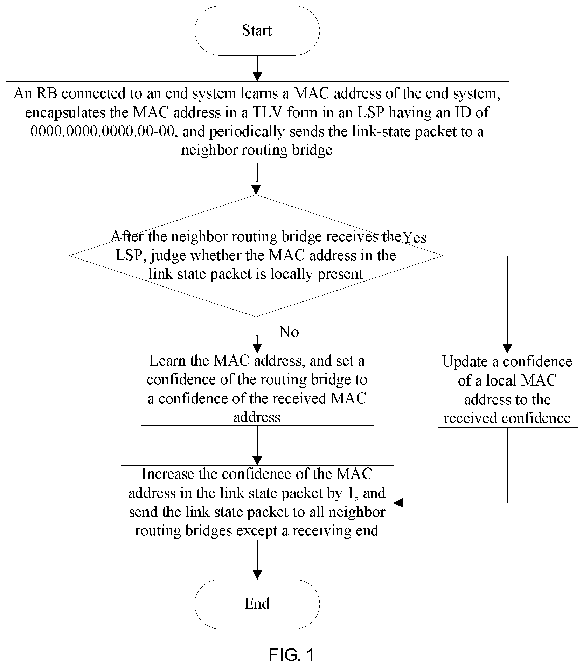

To be specific, as illustrated in FIG. 1, a method for learning a MAC address of a TRILL network includes the following steps:
learning, by a routing bridge (RB) connected to an end system (ES), a MAC address of the end system, encapsulating the MAC address in a TLV (specifically MAC-Reachability TLV) form in a link-state packet (LSP) having an ID of 0000.0000.0000.00-00, and periodically sending the link-state packet to a neighbor routing bridge;
after the neighbor routing bridge receives the LSP, judging whether the MAC address in the link-state packet is locally present;
if the MAC address is not present, learning the MAC address in the link-state packet, and setting a confidence of the routing bridge to a confidence of the received MAC address;
if the MAC address is present, updating a confidence of a local MAC address to the received confidence; and
increasing the confidence of the MAC address in the link-state packet by 1, and sending the link-state packet to all neighbor routing bridges except a receiving end.

To be specific, in the method for learning a MAC address in a TRILL network, firstly the routing bridge connected to the end system learns the MAC address of the end system, encapsulates the MAC address into the link-state packet and periodically sends the link-state packet to the neighbor routing bridge. During this process, the routing bridge, upon learning the MAC address of the end system, encapsulates the MAC address in the link-state packet having an ID of 0000.0000.0000.00-00 in a MAC-Reachability TLV form. Upon receiving the link-state packet, the neighbor routing bridge judges whether the MAC address in the link-state packet is locally present. If the MAC address in the link-state packet is locally present, the confidence of the local MAC address is updated to the received value. If the MAC address in the link-state packet is not locally present, the MAC address is learned, and the local confidence is set to the confidence of the received MAC address. Afterwards, the confidence of the MAC address in the link-state packet is increased by 1, and the link-state packet is sent to all neighbor routing bridges except the receiving end.

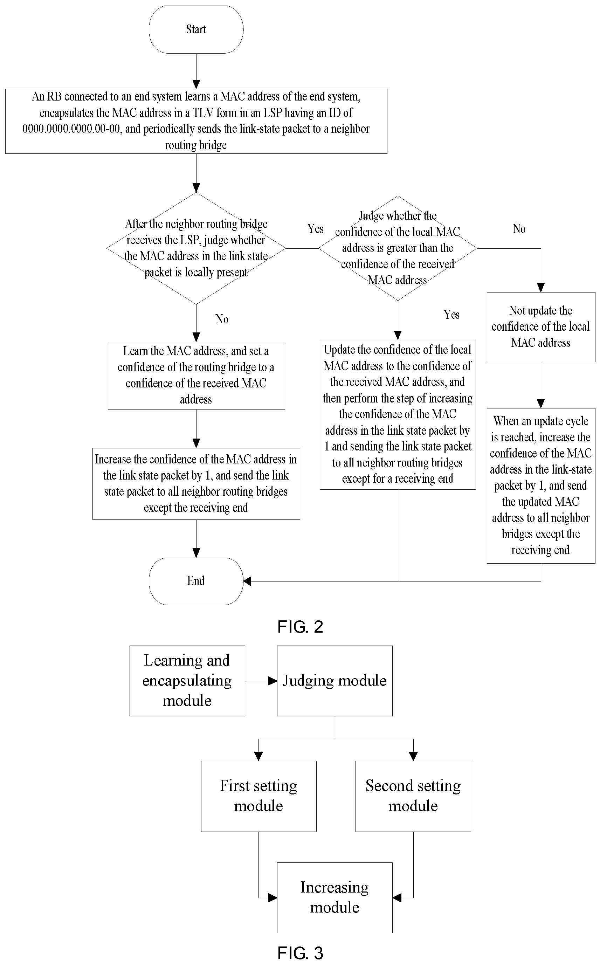

As illustrated in FIG. 2, the process of updating a confidence of a local MAC address to the received confidence includes the following steps:
judging whether the confidence of the local MAC address is greater than the confidence of the received MAC address;
if the confidence of the local MAC address is greater than the confidence of the received MAC address, updating the confidence of the local MAC address to the confidence of the MAC address in the link-state packet, and the performing the step of increasing the confidence of the MAC address in the link-state packet by 1 and sending the link-state packet to all neighbor routing bridges except for a receiving end; and
if the confidence of the local MAC address is not greater than the confidence of the MAC address in the received link-state packet, not updating the confidence of the local MAC address, and when an update cycle is reached, increasing the confidence of the MAC address in the link-state packet by 1, and sending the updated link-state packet to all neighbors except the receiving end.

To be specific, when the MAC address in the link-state packet is locally present, the confidence of the local MAC address is compared with the confidence of the received MAC address. If the confidence of the received MAC address is less than the confidence of the local MAC address, the confidence of the local MAC address is updated to the confidence of the received MAC address, and otherwise, the confidence of the local MAC address is not updated. After the local MAC address is updated, the confidence field in the TLV is increased by 1, and the local MAC address is sent to all neighbors except the receiving end. When the confidence reaches 255, the link-state packet is not sent out.

It should be noted that in this embodiment, if the confidence of the local MAC address is less than the confidence of the MAC address in the received link-state packet, the confidence of the MAC address is not updated temporarily. However, when the update cycle is reached, the confidence of the local MAC address is increased by 1, the local MAC address is sent to all neighbors except the receiving end. In the TRILL network, after the above operation is performed for all the routing bridges, the MAC address information of the end system may be synchronized to all the devices in the network.

Further, the method for learning a MAC address of a TRILL network is summarized as follows:
Step 1: The RB, upon learning the MAC address of the ES, encapsulates the MAC address in an LSP having an ID of 0000.0000.0000.00-00 in a TLV form, and periodically sends the LSP to all the routing bridges.

Step 2: Upon receiving the LSP, with respect to each MAC address in the TLV, the routing bridge firstly checks whether the MAC address is present. If the MAC address is not locally present, the MAC address is learned, wherein the confidence thereof is the received confidence. If the MAC address is locally present, the confidence of the local MAC address is compared with the confidence of the received MAC address. If the confidence of the received MAC address is less than the confidence of the local MAC address, the confidence of the local MAC address is updated to the confidence of the received MAC address; and otherwise, the confidence of the local MAC address is not updated. After the local MAC address is updated, the confidence field in the TLV is increased by 1, and the link-state packet is sent to all neighbors except the receiving end. When the confidence reaches 255, the link-state packet is not sent out.

Step 3: Step 1 and step 2 are performed for all the routing bridges, such that the MAC address information of the end system is synchronized to all the devices in the network.

In this embodiment, the MAC address is advertised using an intermediate system-to-intermediate system (IS-IS) flooding mechanism, and infinite cycling of the link-state packet is prevented using a mechanism of increasing the confidences of the routing bridges one by one. The method according to the present disclosure does not affect synchronization of an original TRILL link-state database, and does not rely on a TRILL router. In addition, the method may be simply practiced, and thus system resources are saved.

### Embodiment 2

Based on the method for learning a MAC address of a TRILL network according to the above embodiment, this embodiment provides an apparatus for learning a MAC address of a TRILL network.

As illustrated in FIG. 3, an apparatus for learning a MAC address of a TRILL network includes:
a learning and encapsulating module, configured to learn a MAC address of an end system and encapsulate the MAC address in a link-state packet;
a judging module, connected to the learning and encapsulating module, and configured to judge whether the MAC address in the link-state packet is locally present;
a first setting module, connected to the judging module, and configured to set a local confidence to a confidence of the MAC address in the link-state packet;
a second setting module, connected to the judging module, and configured to update a confidence of a local MAC address to the confidence of the MAC address in the link-state packet; and
an increasing module, connected to the first setting module and the second setting module respectively, and configured to increase the confidence of the MAC address in the link-state packet by 1.

To be specific, in this embodiment, the learning and encapsulating module in the routing bridge connected to the end system learns the MAC address of the end system, encapsulates the MAC address of the end system in the link-state packet, and sends the link-state packet to the neighbor routing bridge. Then the judging module judges whether the MAC address in the link-state packet is locally present. If the MAC address in the link-state packet is not locally present, the first setting module sets the local confidence to the confidence of the MAC address in the link-state packet. If the MAC address in the link-state packet is locally present, the second setting module updates the confidence of the local MAC address to the confidence of the MAC address in the link-state packet. The increasing module increases the confidence of the MAC address in the link-state packet by 1. Finally, the local routing bridge sends the link-state packet to all the neighbor routing bridges except the receiving end.

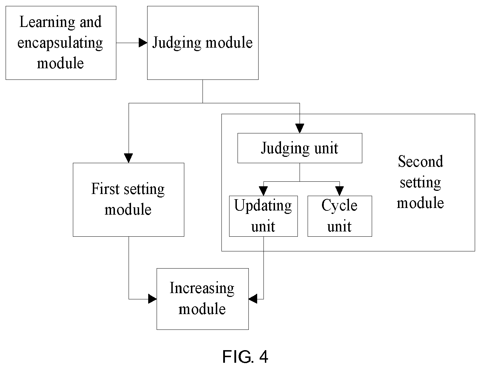

As illustrated in FIG. 4, the second setting module includes:
a judging unit, connected to the judging module, and configured to judge whether the confidence of the local MAC address is greater than the confidence of the MAC address in the received link-state packet;
an updating unit, connected to the judging unit and the increasing module, and configured to update the confidence of the local MAC address to the confidence of the MAC address in the link-state packet; and
a cycle unit, connected to the judging unit, and configured to, when an update cycle is reached, increase the confidence of the MAC address in the link-state packet by 1, and then send the updated link-state packet to all neighbors except a receiving end.

To be specific, when the MAC address in the link-state packet is locally present, firstly the judging unit judges whether the confidence of the local MAC address is greater than the confidence of the MAC address in the received link-state packet. If the confidence of the local MAC address is greater than the confidence of the MAC address in the received link-state packet, the updating unit updates the confidence of the local MAC address to the confidence of the MAC address in the link-state packet, and then the increasing module increases the confidence of the MAC address in the link-state packet by 1. If confidence of the local MAC address is not greater than the confidence of the MAC address in the received link-state packet, the confidence of the local MAC address is not updated; and when the update cycle is reached, the cycle unit increases the confidence of the MAC address in the link-state packet by 1, and then sends the updated link-state packet to all the neighbors except the receiving end.

A person skilled in the art, upon reading the above description, would find it apparent to make various variations and modifications. Therefore, the appended claims shall be considered as covering all the variations and modifications with regard to the essential intention and scope of the present disclosure. Any equivalent scope and contents within the scope defined by the claims shall be considered as falling within the intention and scope of the present disclosure.

## Claims

1. A method for learning a media access control (MAC) address of a Transparent Interconnection of Lots of Links (TRILL) network, comprising:
learning, by a routing bridge connected to an end system, a MAC address of the end system;
encapsulating the MAC address in a link-state packet, and sending the link-state packet to a neighbor routing bridge;
after the neighbor routing bridge receives the link-state packet, judging whether the MAC address in the link-state packet is locally present;
if the MAC address is not locally present, learning the MAC address in the link-state packet, and setting a local confidence to a confidence of the MAC address in the link-state packet;
if the MAC address is locally present, updating a confidence of a local MAC address to the confidence of the MAC address in the link-state packet; and
increasing the confidence of the MAC address in the link-state packet by 1, and sending the link-state packet to all neighbor routing bridges except a receiving end.

2. The method for learning a MAC address of a TRILL network according to claim 1, wherein the MAC address of the end system is encapsulated in the link-state packet in a TLV form.

3. The method for learning a MAC address of a TRILL network according to claim 2, wherein an identifier (ID) of the link-state packet is 0000.0000.0000.00-00.

4. The method for learning a MAC address of a TRILL network according to claim 1, wherein the updating a confidence of a local MAC address to the confidence of the MAC address in the link-state packet comprises:
judging whether the confidence of the local MAC address is greater than the confidence of the MAC address in the received link-state packet;
if the confidence of the local MAC address is greater than the confidence of the MAC address in the received link-state packet, updating the confidence of the local MAC address to the confidence of the MAC address in the link-state packet, and performing the step of increasing the confidence of the MAC address in the link-state packet by 1 and sending the link-state packet to all neighbor routing bridges except for a receiving end; or
if the confidence of the local MAC address is not greater than the confidence of the MAC address in the received link-state packet, not updating the confidence of the local MAC address.

5. The method for learning a MAC address of a TRILL network according to claim 4, wherein upon the step of not updating the confidence of the local MAC address, the method further comprises:
when an update cycle is reached, increasing, by a local routing bridge, the confidence of the MAC address in the link-state packet by 1, and sending the updated link-state packet to all neighbors except the receiving end.

6. The method for learning a MAC address of a TRILL network according to claim 5, wherein the link-state packet is flooded to all routing bridges in the TRILL network, and the routing bridge performs the step of judging whether the MAC address in the link-state packet is locally present upon receiving the link-state packet.

7. The method for learning a MAC address of a TRILL network according to claim 5, wherein when the confidence in the link-state packet reaches 255, the link-state packet is not sent out.

8. An apparatus for learning a media access control (MAC) address of a Transparent Interconnection of Lots of Links (TRILL) network, comprising:
a learning and encapsulating module, configured to learn a MAC address of an end system and encapsulate the MAC address in a link-state packet;
a judging module, connected to the learning and encapsulating module, and configured to judge whether the MAC address in the link-state packet is locally present;
a first setting module, connected to the judging module, and configured to set a local confidence to a confidence of the MAC address in the link-state packet;
a second setting module, connected to the judging module, and configured to update a confidence of a local MAC address to the confidence of the MAC address in the link-state packet; and
an increasing module, connected to the first setting module and the second setting module respectively, and configured to increase the confidence of the MAC address in the link-state packet by 1.

9. The apparatus for learning a MAC address of a TRILL network according to claim 8, wherein the second setting module comprises:
a judging unit, connected to the judging module, and configured to judge whether the confidence of the local MAC address is greater than the confidence of the MAC address in the received link-state packet; and
an updating unit, connected to the judging unit and the increasing module, and configured to update the confidence of the local MAC address to the confidence of the MAC address in the link-state packet.

10. The apparatus for learning a MAC address of a TRILL network according to claim 9, wherein the second setting unit comprises:
a cycle unit, connected to the judging unit, and configured to, when an update cycle is reached, increase the confidence of the MAC address in the link-state packet by 1, and send the updated link-state packet to all neighbors except a receiving end.
